**Europäisches Patentamt**

**European Patent Office**

**Office européen des brevets**

(11) Veröffentlichungsnummer: **0 423 574 A1**

# EUROPÄISCHE PATENTANMELDUNG

(21) Anmeldenummer: 90119215.3

(22) Anmeldetag: 06.10.90

(51) Int. Cl.5: **B29B 7/76**

(30) Priorität: 19.10.89 DE 3934863

(43) Veröffentlichungstag der Anmeldung:
**24.04.91 Patentblatt 91/17**

(84) Benannte Vertragsstaaten:
**AT CH ES FR GB IT LI NL SE**

(71) Anmelder: **Krauss-Maffei Aktiengesellschaft
Krauss-Maffei-Strasse 2
W-8000 München 50(DE)**

(72) Erfinder: **Bauer, Adolf, Ing. grad.
Heideweg 24 b
W-8037 Olching(DE)**

(54) Misch- und Dosiervorrichtung für reaktive Kunststoffkomponenten.

(57) Bei einer Vorrichtung zum Mischen und Dosieren von wenigstens zwei reaktiven Kunststoffkomponenten werden die Kunststoffkomponenten in einer aus Dosierkolben (15, 16) und Dosierzylindern (17, 18) bestehenden Dosiervorrichtung hinsichtlich Menge und Mengenverhältnis dosiert und dem Mischkopf (1) zugeleitet. Um Störeinflüsse auf die Genauigkeit des Zeitpunktes beim Einspritzen der Komponenten in die im Mischkopf angeordnete Mischkammer und auf das Mischungsverhältnis der Komponenten ausschließen zu können, wird vorgeschlagen, den Mischkopf und die aus Dosierkolben und Dosierzylindern bestehende Dosiervorrichtung zu einer Baueinheit zusammenzufassen.

Fig. 1

EP 0 423 574 A1

## MISCH- UND DOSIERVORRICHTUNG FÜR REAKTIVE KUNSTSTOFFKOMPONENTEN

Die Erfindung bezieht sich auf eine Vorrichtung zum Dosieren und Mischen von wenigstens zwei reaktiven Kunststoffkomponenten gemäß Oberbegriff des Patentanspruchs 1.

Eine Vorrichtung dieser Art ist aus der DE-OS 32 40 296 bekannt, bei der die einzelnen Kunststoffkomponenten in gesonderten Dosiervorrichtungen aus den Vorratstanks angesaugt und dosiert über Leitungen dem Mischkopf zugeführt werden. Der Leitungsabstand zwischen der Dosiervorrichtung und dem Mischkopf, das Atmen der aus flexiblen Schläuchen und Rohren bestehenden Leitungen sowie die Kompressibilität des Mediums wirken sich dabei in Bezug auf schnelle und genaue Regelkonstanten der einzelnen Komponenten und die sich daraus ergebenden Abweichungen im Mischungsverhältnis der einzelnen Komponenten zueinander nachteilig aus.

Der Erfindung liegt daher die Aufgabe zugrunde, eine Vorrichtung der genannten Art so zu verbessern, daß störende Faktoren für die Regelgenauigkeit der Komponenten eliminiert werden.

Die Aufgabe wird erfindungsgemäß durch die kennzeichnenden Merkmale des Patentanspruchs 1 gelöst.

In einer vorteilhaften Ausführungsform sind die Regelorgane Für die Hydraulik zum Antreiben der Dosierkolben der Dosiervorrichtung direkt an den Dosierzylindern angeordnet. Die Regelorgane umfassen dabei jeweils einen geschlossenen Regelkreis mit Wegmessung des Dosierkolbens, mit zugeordnetem Rechner und dem ausführenden Organ des Servoventils, welches aufgrund seiner direkten Anordnung an der Zylindereinheit eine verzögerungsfreie hydraulische Betätigung des Dosierkolbens und damit auch zur präzisen Einhaltung der Regel konstanten beiträgt.

Weitere vorteilhafte Weiterbildungen und Ausgestaltungen der erfindungsgemäßen Misch- und Dosiervorrichtung ergeben sich aus den Unteransprü- chen.

Die Erfindung wird nachstehend anhand der Zeichnung näher erläutert.

Es zeigen:

Fig. 1 die Draufsicht auf eine Misch-und Dosiervorrichtung in teilweise geschnittener Darstellung gemäß der Schnittlinie I-I in Fig. 2,

Fig. 2 die Seitenansicht der Vorrichtung nach Fig. 1 in teilweise geschnittener Darstellung gemäß der Schnittlinie II-II in Fig 1.

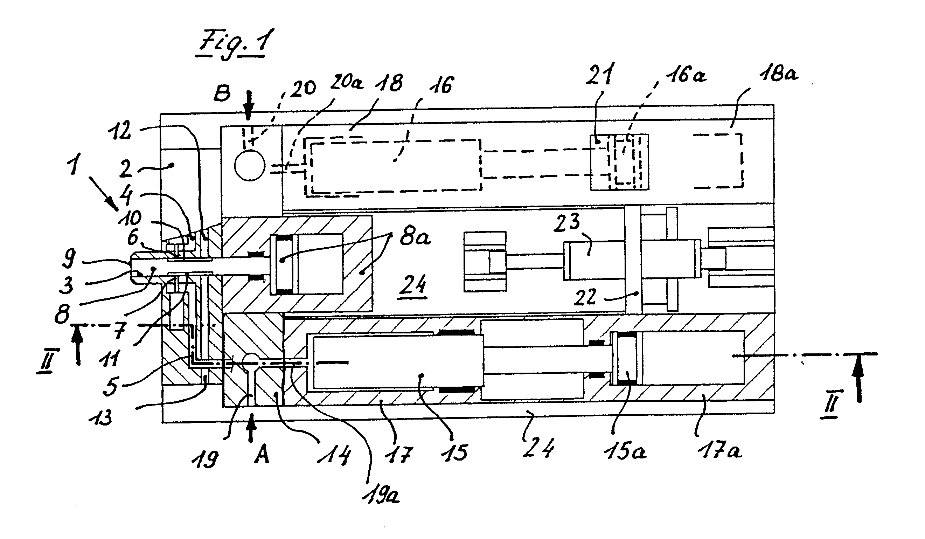

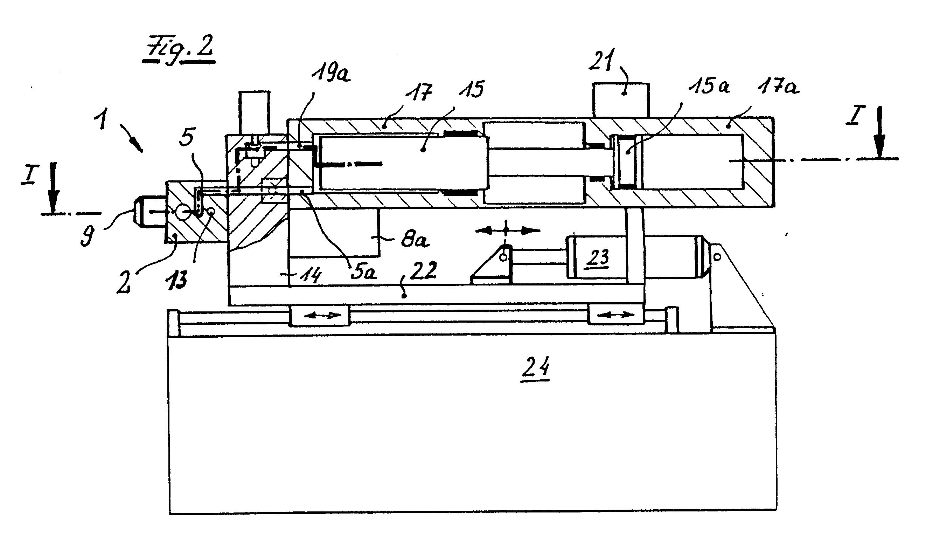

Die Fig. 1 und 2 zeigen einen Mischkopf 1, bestehend aus einem Gehäuseblock 2 mit zylindrischer Mischkammer 3, in die eine Komponentenzulaufleitung 4 für die Komponente A (z.B. Polyol) und eine Komponentenzulaufleitung 5 für die Komponente B (z.B. Isocyanat) einmünden. Die Injektionsöffnungen 6 und 7 dieser Komponentenzulaufleitungen 4 und 5 werden von einem Steuerkolben 8 auf- und zugesteuert, der in der Mischkammer 3 reversierbar geführt ist. Der Steuerkolben 8 befindet sch in der Schließstellung in der dessen Stirnfläche 9 mit der Auslaßöffnung der Mischkammer 3 bündig abschließt. In dieser Stellung befindet sich der Steuerkolben 8 auch in der Rezirkulationsstellung, in der die Komponentenzulaufleitungen 4 und 5 über im Steuerkolben 8 ausgebildete Rezirkulationsnuten 10 und 11 mit Komponentenrezirkulationsleitungen 12 und 13 verbunden sind, die zu den jeweiligen Komponententanks (nicht dargestellt) führen.

Am Gehäuseblock 2 sind ferner die hydraulische Kolben-Zylindereinheit 8a für den Steuerkolben 8 und ein Verteilerblock 14 angeordnet, an dem wiederum zwei, jeweils aus einem Dosierkolben 15,16 und einem Dosierzylinder 17,18 bestehende Dosiervorrichtungen für die Komponenten A und B befestigt sind. Die Dosierkolben 15,16 bestehen aus Plungerkolben, mit denen die Komponenten über im Boden der Dosierzylinder 17,18 befindliche Komponentenansaugkanäle 19a,20a aus den Tankzulaufleitungen 19 und 20 angesaugt und dosiert über die Komponentenausstoßkanäle 4a,5a und die Komponentenzulaufleitungen 4 und 5 in die Mischkammer 3 gefördert werden.

Die Komponentenzulaufleitungen 4 und 5 sind somit äußerst kurz, so daß Störeinflüsse durch Atmen der Leitungsführung und durch die Kompressibilität der Komponenten weitestgehend ausgeschlossen sind. Eine weitere Verkürzung der Komponentenzulaufleitungen kann noch dadurch erreicht werden, daß die Dosierkolben und die Dosierzylinder direkt am Gehäuseblock des Mischkopfes angeflanscht werden (nicht dargestellt). Bei dieser Ausführungsform münden zweckmäßigerweise die Tankzulaufleitungen jeweils in die Böden der Dosierzylinder.

Die Dosierkolben 15,16 werden von in Hydraulikzylindern 17a,18a geführten Hydraulikkolben 15a,16a betätigt, die von unmittelbar auf den Hydraulikzylindern 17a,18a angeordneten Regelorganen 21 angesteuert werden, wobei der geschlossene Regelkreis über die Wegmessung des Dosierkolbens 15,16 einen zugeordneten Rechner und das ausführende Organ des Servoventils (nicht dargestellt) erfolgt, das wegen seiner unmittelbaren Anordnung am Hydraulikzylinder 17a,18a ein verzögerungsfreies Ansprechen der Hydraulik für die Dosierkolben 15 und 16 sicherstellt.

Die im wesentlichen aus dem Mischkopf 1, der hydraulischen Kolben-Zylin dereinheit 8a, dem Verteilerblock 14, den Dosierkolben 15,16, den Dosierzylindern 17,18 sowie den zugehörigen Hydraulikkolben 15a,16a und Hydraulikzylindern 17a,18a bestehende Baueinheit ist auf einem Verfahrschlitten 22 befestigt, mit dem die Baueinheit mittels eines Verstellzylinders 23 auf einem Grundgestell 24 verschiebbar ist, so daß der Mischkopf 1 in eine vorgeschobene und in eine zurückgezogene Stellung positioniert werden kann.

Diese Konzeption der mit dem Verfahrschlitten 22 verschiebbaren Baueinheit von Mischkopf und Dosiervorrichtung ist insbesondere bei Formträgeranlagen vorteilhaft, bei denen die Baueinheit mit dem Mischkopf im Vorschub-Zyklus jeweils an ein Werkzeug angedockt und nach dem Füllen des Werkzeugs und Beginn der Aushärtezeit in einem Rückzug-Zyklus wieder abgedockt werden kann.

Nach der Rückzugbewegung der Baueinheit ist genügend Freiraum vorhanden, wenn die Werkzeuge oder der Formträger geschwenkt werden müssen.

Die bisher für diesen Fall gegebene Notwendigkeit, den Mischkopf mit flexiblen Schläuchen auszurüsten, entfällt damit.

## Ansprüche

1. Vorrichtung zum Dosieren und Mischen von wenigstens zwei reaktiven Kunststoffkomponenten mit einem Mischkopf, in dem die Kunststoffkomponenten gemischt werden, und mit einer der Anzahl der Kunststoffkomponenten entsprechenden Anzahl von Dosiervorrichtungen, mit denen die Menge und gegebenenfalls das Mengenverhältnis der dem Mischkopf zuzuleitenden Kunststoffkomponenten dosierbar ist, **dadurch gekennzeichnet**, daß der Mischkopf (1) und die Dosiervorrichtungen eine Baueinheit bilden.

2. Vorrichtung nach Anspruch 1, **dadurch gekennzeichnet**, daß der Mischkopf (1) einen einstückigen Gehäuseblock (2) aufweist, in dem eine zylindrische Mischkammer (3) ausgebildet ist, in die Komponentenzulaufleitungen (4,5) einmünden, die von einem innerhalb der zylindrischen Mischkammer (3) reversierbaren Steuerkolben (8) auf- und zusteuerbar sind, die Dosiervorrichtungen jeweils aus einem Dosierkolben (15,16), einem Dosierzylinder (17,18), einem Hydraulikkolben (15a,16a) und einem Hydraulikzylinder (17a,18a) zur Betätigung des Dosierkolbens (15,16) bestehen, wobei jeder Dosierzylinder (17,18) jeweils einen Komponentenansaugkanal (19a,20a) und einen Komponentenausstoßkanal (4a,5a) aufweist, der mit der zugehörigen Komponentenzulaufleitung (4,5) im Gehäuseblock (2) des Mischkopfes (1) verbunden ist.

3. Vorrichtung nach Anspruch 1 oder 2, **dadurch gekennzeichnet**, daß der Steuerkolben (8) der Anzahl der Komponentenzulaufleitungen (4,5) entsprechende Rezirkulationsnuten (10,11) aufweist, mit denen die Komponentenzulaufleitungen (4,5) in der Schließstellung des Steuerkolbens (8) mit im Gehäuseblock (2) befindlichen Komponentenrezirkulationsleitungen (12,13) verbunden sind.

4. Vorrichtung nach einem der Ansprüche 1 bis 3, **dadurch gekennzeichnet**, daß die Dosiervorrichtungen am Gehäuseblock (2) unter Zwischenlage eines Verteilerblocks (14) befestigt sind.

5. Vorrichtung nach Anspruch 4, **dadurch gekennzeichnet**, daß der Verteilerblock (14) Anschlüsse für zu den Komponentenansaugkanälen (19a,20a) führende Tankzulaufleitungen (19,20) trägt.

6. Vorrichtung nach einem der Ansprüche 4 oder 5, **dadurch gekennzeichnet**, daß der Verteilerblock (14) Anschlüsse für zu den Komponentenrezirkulationsleitungen (12,13) führende Kanäle trägt.

7. Vorrichtung nach einem der Ansprüche 1 bis 3, **dadurch gekennzeichnet**, daß jeder Dosierzylinder (17,18) unmittelbar am Gehäuseblock (2) befestigt ist.

8. Vorrichtung nach einem der Ansprüche 1 bis 7, **dadurch gekennzeichnet**, daß die Regelorgane (21) zum Steuern des Hydraulikkolbens (15a,16a) unmittelbar am Hydraulikzylinder (17a,18a) angeordnet sind.

9. Vorrichtung nach einem der Ansprüche 1 bis 8, **dadurch gekennzeichnet**, daß die Baueinheit auf einem Verfahrschlitten (22) angeordnet ist, mit dem die Baueinheit mittels eines Verstellzylinders (23) auf einem Grundgestell (24) verschiebbar ist.

Fig.1

Fig. 2

Europäisches
Patentamt

**EUROPÄISCHER
RECHERCHENBERICHT**

Nummer der Anmeldung

**EP 90 11 9215**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 301 292 (BAYER) <br> * Seite 5; Figuren * <br> – – – | 1-9 | B 29 B <br> 7/76 |
| A | GB-A-1 530 339 (VIKING) <br> * Figuren * <br> – – – | 3 | |
| A | US-A-3 117 696 (HERMANN) <br> – – – | | |
| A | EP-A-0 003 563 (BAYER) <br> – – – | | |
| A | US-A-3 843 023 (VROOM) <br> – – – – – | | |

RECHERCHIERTE
SACHGEBIETE (Int. Cl.5)

B 29 B

Der vorliegende Recherchenbericht wurde für alle Patentansprüche erstellt

| Recherchenort | Abschlußdatum der Recherche | Prüfer |
|---|---|---|
| Den Haag | 18 Januar 91 | PEETERS S. |